# EUROPEAN PATENT APPLICATION

(11) **EP 3 330 566 A1**
(43) Date of publication of application: **06.06.2018**
(21) Application number: 16830400.4
(22) Date of filing: 20.07.2016
(51) Int. Cl.: F16F 9/46, B60G 15/06, B60G 17/08, B62K 25/20, F16F 9/32

(54) **SHOCK ABSORBER**

(30) Priority: 30.07.2015 JP 2015150253
(71) Applicant: KYB Corporation, Tokyo 105-6111 (JP)
(72) Inventor: MOCHIZUKI, Takahisa, Tokyo 105-6111 (JP)
(74) Representative: Grünecker Patent- und Rechtsanwälte PartG mbB
(86) International application number: PCT/JP2016/071268
(87) International publication number: WO 2017/018295

(57) **Abstract**

The shock absorber (A) includes a shock absorber main body (1), a spring seat (21) that supports one end of a suspension spring (2) and is movable in an axial direction of the shock absorber main body (1), a jack (3) that adjusts a position of the spring seat (21), and an auxiliary spring (22) interposed between the spring seat (21) and the jack (3).

## Description

### TECHNICAL FIELD

The present invention relates to a shock absorber.

### BACKGROUND ART

Conventionally, a shock absorber is used for supporting a rear wheel of a saddle-ride type vehicle such as a two-wheeled vehicle or a three-wheeled vehicle. Such a shock absorber includes a shock absorber configured to adjust a vehicle height by moving a spring seat that supports one end of a suspension spring with a jack (for example, see JP2010-149548A).

### SUMMARY OF INVENTION

In the shock absorber configured to adjust the vehicle height, when an adjustment amount of the vehicle height is expected to increase, it is preferable to increase the vehicle-height adjustment amount without changing the suspension spring. This is because redesign of the suspension spring optimally designed is complicated.

However, in the conventional shock absorber, when the vehicle-height adjustment amount is simply increased without changing the suspension spring, load does not act on the suspension spring when the shock absorber has fully extended, thus possibly causing a state where the suspension spring can move freely in an axial direction, that is, a state where the suspension spring is idle. If the suspension spring is idle, for example, when elastic force of the suspension spring supports the jack that drives the spring seat, a position of the jack is possibly displaced off, and the jack possibly drops. Even if the positional displacement of the jack is prevented, in the state where the suspension spring is idle, there is a possibility that the spring seat separates from the jack when the shock absorber extends, and the jack abuts on the spring seat to generate abnormal noise and these relative positions are displaced off when the shock absorber contracts. When the suspension spring is changed to stop being idle, a spring constant of the suspension spring has to be decreased. Thus, when the spring constant of the suspension spring is decreased, the suspension spring is possibly closely wound to substantially increase its mass.

It is an object of the present invention to provide a shock absorber configured to prevent a suspension spring from being idle even when a vehicle-height adjustment amount is increased without changing the suspension spring.

According to one aspect of the present invention, a shock absorber includes: a shock absorber main body; a spring seat configured to support one end of a suspension spring, the spring seat being movable in an axial direction of the shock absorber main body; a jack configured to adjust a position of the spring seat; and an auxiliary spring interposed between the spring seat and the jack.

### BRIEF DESCRIPTION OF DRAWINGS

FIG. 1 is a side view simplistically illustrating a vehicle on which a shock absorber according to an embodiment of the present invention is mounted.
FIG. 2 is a front view illustrating the shock absorber according to the embodiment of the present invention in an unloaded state that has been partially cut out. FIG. 2 illustrates a state where a piston is maximally advanced, at a right side of a center line, and a state where the piston is maximally retreated, at a left side of the center line.
FIG. 3 is a front view illustrating the shock absorber according to the embodiment of the present invention in a 1G state that has been partially cut out. FIG. 3 illustrates a state where the piston is maximally advanced, at a right side of a center line, and a state where the piston is maximally retreated, at a left side of the center line.
FIG. 4 is a view where a part of FIG. 2 is enlarged.

### DESCRIPTION OF EMBODIMENTS

The following describes an embodiment of the present invention with reference to the drawings. Like reference numerals designate identical elements throughout some drawings.

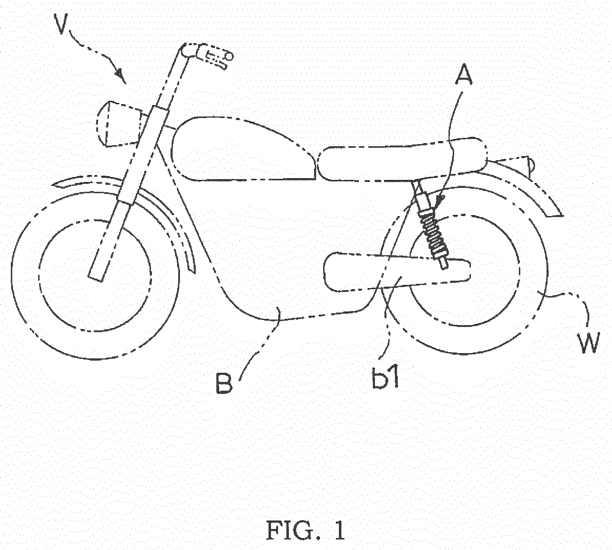

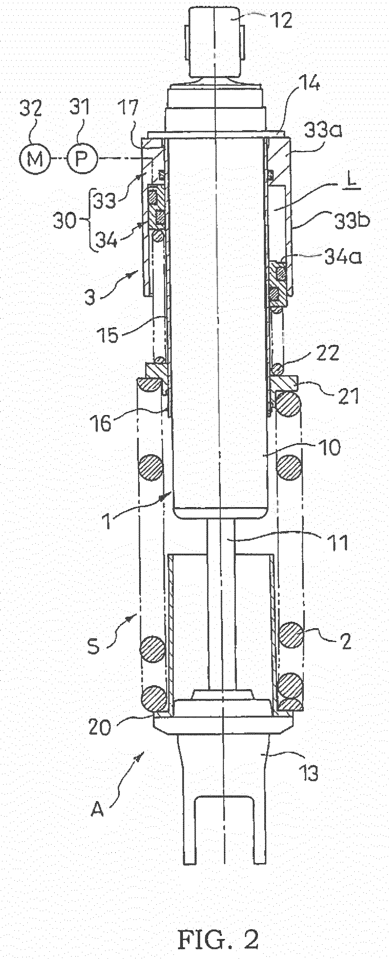

As illustrated in FIG. 1, a shock absorber A according to the embodiment of the present invention is interposed between a vehicle body B and a rear wheel W of a vehicle V that is a motorcycle. As illustrated in FIG. 2, the shock absorber A includes a shock absorber main body 1, a suspension spring 2 disposed on an outer periphery of the shock absorber main body 1, a spring seat 20 that supports a lower end in FIG. 2 of the suspension spring 2, a spring seat 21 that supports an upper end in FIG. 2 of the suspension spring 2, a jack 3 that adjusts a position of the spring seat 21, and an auxiliary spring 22 interposed between the spring seat 21 and the jack 3.

The shock absorber main body 1 includes a pipe-shaped outer shell 10, and a rod 11 movably inserted into the outer shell 10. The shock absorber main body 1 provides damping force that reduces relative movement in an axial direction of the outer shell 10 and the rod 11. On the outer shell 10 and the rod 11, brackets 12, 13 are disposed respectively. The bracket 12 at a side of the outer shell 10 is coupled to the vehicle body B. The bracket 13 at a side of the rod 11 is coupled to a swing arm b1 (FIG. 1) that supports the rear wheel W via a link (not illustrated). Accordingly, when impact by unevenness of the road surface is input to the rear wheel W, the rod 11 comes in and out of the outer shell 10 to extend and contract the shock absorber main body 1, thus providing the damping force. Then, as a result that the suspension spring 2 extends and contracts together with the shock absorber main body 1, the shock absorber A extends and contracts.

The suspension spring 2, which is a coiled spring formed such that a wire rod is wound into a coil form, when being compressed, provides elastic force against this compression. The spring seat 20 that supports the lower end in FIG. 2 of the suspension spring 2 is formed into a ring shape to be disposed on an outer periphery of the rod 11. The bracket 13 at the lower side in FIG. 2 restricts the spring seat 20 from moving downward in FIG. 2 with respect to the rod 11. The spring seat 21, which supports the upper end in FIG. 2 of the suspension spring 2, is formed into a ring shape to be disposed on an outer periphery of the outer shell 10. The spring seat 21 is supported by the jack 3 via the auxiliary spring 22.

On the outer periphery at an upper end portion in FIG. 2 of the outer shell 10, a flange 14 that projects outside in a radial direction is disposed. The outer periphery at the lower side in FIG. 2 than the flange 14 of the outer shell 10 is covered with a pipe-shaped guide 15. The guide 15 has an outer periphery that an inner peripheral surface of the spring seat 21 slidably contacts. The spring seat 21 is movable in the axial direction of the outer shell 10. The guide 15 has both ends in the axial direction on which respective ring grooves (not illustrated) formed along a circumferential direction are disposed. With the respective ring grooves, snap rings 16, 17 are engaged. On the outer periphery of the guide 15 between these ring grooves, the spring seat 21, the auxiliary spring 22, and a jack main body 30, which is described later, of the jack 3 are disposed vertically alongside in order from the lower side in FIG. 2. They are retained with the snap rings 16, 17.

The jack 3 includes the jack main body 30, a pump 31 that supplies hydraulic oil to the jack main body 30, and a motor 32 that drives the pump 31. The pump 31 and the motor 32 may have any configurations. Thus, well-known configurations can be employed. Accordingly, detailed descriptions will not be further elaborated here. When the pump 31 is a gear pump, the pump 31 is low-priced and excellent in durability, and can quickly supply the hydraulic oil to the jack main body 30.

The jack main body 30 includes a pipe-shaped housing 33 including a circular base portion 33a disposed on the outer periphery of the guide 15 and a pipe portion 33b that extends downward in FIG. 2 from an outer peripheral portion of the base portion 33a, and a circular piston 34 slidably inserted into the pipe portion 33b of the housing 33. Between the base portion 33a and the guide 15, between the piston 34 and the guide 15, and between the piston 34 and the pipe portion 33b, respective circular O-rings (not illustrated) are disposed. Gaps between them are sealed with the O-rings. A circular space surrounded by the base portion 33a, the pipe portion 33b, the piston 34, and the guide 15 is a liquid chamber L where the hydraulic oil is filled.

The liquid chamber L is coupled to the pump 31 via a hose or the like. When the hydraulic oil is supplied to the liquid chamber L from the pump 31, the piston 34 advances downward in FIG. 2 to enlarge a volume of the liquid chamber L. In contrast, when the hydraulic oil inside the liquid chamber L is discharged by the pump 31, the piston 34 retreats upward in FIG. 2 to decrease the volume of the liquid chamber L.

The auxiliary spring 22 is disposed on the outer periphery of the guide 15 to be interposed between the jack main body 30 and the spring seat 21. The auxiliary spring 22, which is a coiled spring formed such that a wire rod is wound into a coil form, when being compressed, provides elastic force against the compression. The auxiliary spring 22 has one end at the lower side in FIG. 2 supported by the spring seat 21 and the other end at the upper side supported by the piston 34. The auxiliary spring 22 has an inner diameter equal to or more than an inner diameter of the piston 34. The auxiliary spring 22 has an outer diameter equal to or less than an outer diameter of the piston 34. Accordingly, when the piston 34 is moved upward in FIG. 2, as illustrated at the left side in FIG. 2, the auxiliary spring 22 is inserted into the pipe portion 33b with being supported by the piston 34.

The spring seat 21 that supports the one end of the auxiliary spring 22, as described above, also supports the end portion at the upper side in FIG. 2 of the suspension spring 2. Thus, the auxiliary spring 22 is serially coupled to the suspension spring 2 via the spring seat 21.

When the configuration where the suspension spring 2, the spring seat 21, and the auxiliary spring 22 that are thus serially coupled are put together is defined as a spring member S, elastic force of the spring member S acts on the piston 34. Thus, the jack main body 30 is pressed to the flange 14 by this elastic force. The housing 33 of the jack main body 30 pressed to the flange 14 by the elastic force of the spring member S is retained with respect to the guide 15 with the snap ring 17 at the upper side in FIG. 2. Thus, the flange 14 and the snap ring 17 restrict the guide 15 from moving in the axial direction with respect to the outer shell 10. The elastic force of the spring member S also acts on the spring seat 20 at the lower side in FIG. 2. Thus, the spring seat 20 is pressed to the bracket 13 by this elastic force. Accordingly, when the shock absorber main body 1 extends and contracts, the spring member S extends and contracts. Thus, the vehicle body B is elastically supported by the spring member S.

FIG. 2 illustrates the shock absorber A in an unloaded state that is under no load. In the unloaded state, the shock absorber A returns to a natural length, and the shock absorber main body 1 becomes in a fully extended state. At the right side of a center line in FIG. 2, a state where the piston 34 has been maximally advanced downward is illustrated. At the left side of the center line in FIG. 2, a state where the piston 34 has been maximally retreated upward is illustrated.

As illustrated at the right side in FIG. 2, in the state where the piston 34 has been maximally advanced in the unloaded state, the auxiliary spring 22 compresses the suspension spring 2 by a constant amount to provide an initial deformation, thus adding a predetermined initial load to the suspension spring 2. The spring seat 21 is designed not to interfere with the snap ring 16 at the lower side in FIG. 2, even in the state where the piston 34 has been maximally advanced. It should be noted that when the shock absorber A is assembled, by providing the snap ring 16 prevents the spring seat 21 from getting out of the guide 15 by receiving the elastic force of the auxiliary spring 22, thus facilitating assembly operation of the shock absorber A. However, in a state where the assembly of the shock absorber A has completed, the snap ring 16 is disposed on a position that does not interfere with the spring seat 21, thus not preventing the movement of the spring seat 21.

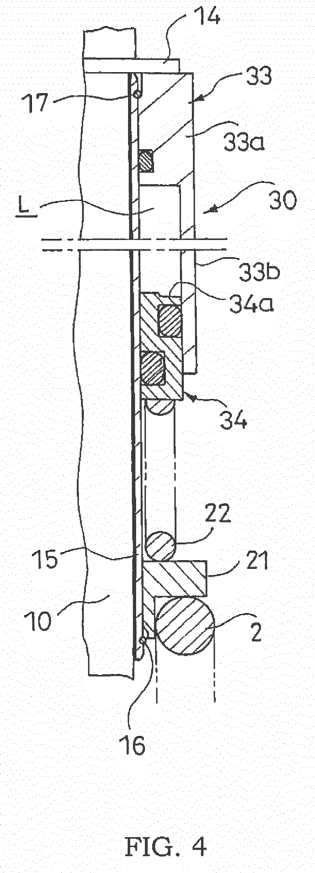

As illustrated at the left side in FIG. 2, in a state where the piston 34 has been maximally retreated in the unloaded state, the piston 34 abuts on the base portion 33a of the housing 33, and the suspension spring 2 and the auxiliary spring 22 become in a state close to the natural length (free height). On an end portion of the piston 34 that is opposed to the base portion 33a, a recess 34a notched into a ring shape toward an outer peripheral side is disposed (see FIG. 4). This recess 34a is opposed to an opening of a flow passage that connects the liquid chamber L to the hose. In view of this, even if the piston 34 is abutted on the base portion 33a when the piston 34 has been maximally retreated, an area of the piston 34 that receives pressure of the hydraulic oil is ensured. It should be noted that the recess 34a may be disposed at the base portion 33a, not at the piston 34.

The natural length of the auxiliary spring 22 is equal to or more than a stroke length of the piston 34, that is, a length that an amount of the initial deformation (a compression length) of the suspension spring 2 is subtracted from a movement distance between the state where the piston 34 has maximally advanced and the state where the piston 34 has maximally retreated.

Here, a case where the auxiliary spring 22 is not disposed, and the piston 34 directly contacts the spring seat 21 will be described. For example, when a state where the piston 34 whose stroke length is Y (mm) is maximally advanced to add the initial load that provides an initial deformation X (mm) to the suspension spring 2, to the suspension spring 2 is optimum, insofar as the stroke length Y of the piston 34 is in a range that does not exceed the initial deformation X of the suspension spring 2, even if the piston 34 is maximally retreated in the unloaded state, the suspension spring 2 does not become in the idle state.

However, in this state, when the stroke length Y of the piston 34 is increased to increase the vehicle-height adjustment amount without changing a condition concerning the suspension spring 2 such as the initial load on the suspension spring 2 and the suspension spring 2, if the stroke length Y exceeds the initial deformation X, the suspension spring 2 sometimes becomes in the idle state. This is because, if the piston 34 is maximally retreated in the unloaded state, after the suspension spring 2 extends by X (mm) to return to the natural length, the piston 34 further retreats by Y - X (mm). That is, the suspension spring 2 becomes in a state movable in the axial direction by this excess retreating amount (Y - X).

In contrast, in the shock absorber A according to the embodiment, the auxiliary spring 22 is disposed between the piston 34 and the spring seat 21. The natural length of this auxiliary spring 22 is set longer than a length that the initial deformation X is subtracted from the stroke length Y of the piston 34, that is, (Y - X). Accordingly, even if the vehicle-height adjustment amount is increased without changing the suspension spring 2, the auxiliary spring 22 fills a gap by an amount that the suspension spring 2 can move in the axial direction (the excess retreating amount) to prevent the suspension spring 2 from becoming in the idle state.

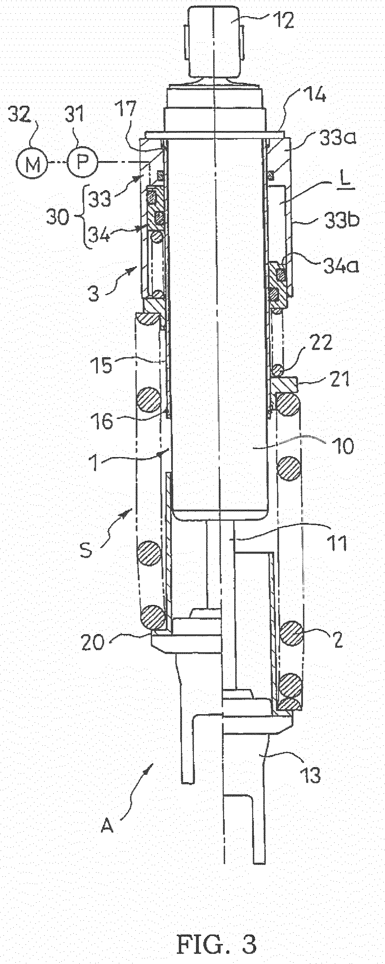

Furthermore, the auxiliary spring 22 has a spring constant set significantly smaller than a spring constant of the suspension spring 2. Specifically, in a state where the piston 34 has maximally advanced in a state where a vehicle weight of the vehicle V that has stopped (motionless) on a horizontal ground acts on the shock absorber A, that is, a 1G state, as illustrated in FIG. 3, the auxiliary spring 22 is maximally compressed to become in a closed height. The closed height of the auxiliary spring 22 is set slightly shorter than a difference between an axial length of the pipe portion 33b of the housing 33 and an axial length of the piston 34. Thus, when an amount of retreat of the piston 34 is increased in the 1G state, as illustrated at the left side of the center line in FIG. 3, the spring seat 21 abuts on a distal end of the pipe portion 33b of the housing 33, and the spring seat 21 becomes in a state supported by the housing 33. FIG. 3 illustrates the shock absorber A in the 1G state. At the right side of the center line in FIG. 3, the state where the piston 34 has been maximally advanced is illustrated. At the left side of the center line in FIG. 3, the state where the piston 34 has been maximally retreated is illustrated.

With respect to the auxiliary spring 22, the suspension spring 2 does not become in the closed height even in a state where the shock absorber A has maximally contracted. That is, in the 1G state, as described above, the spring seat 21 is supported by the housing 33, or the auxiliary spring 22 becomes in the closed height. Thus, a spring constant of the spring member S becomes the spring constant of the suspension spring 2 to be in a state where substantially only the suspension spring 2 supports the vehicle body B.

The following describes operation of the shock absorber A according to the embodiment.

When the vehicle V starts running, the hydraulic oil is supplied to the liquid chamber L with the pump 31 to advance the piston 34. Then, the piston 34, the spring member S, the spring seat 20, and the bracket 13 move downward in FIG. 3, with respect to the outer shell 10. This exits the rod 11 from the outer shell 10 to extend the shock absorber A and increase the vehicle height.

In contrast, when the speed is reduced to stop the vehicle V, the hydraulic oil is discharged from the liquid chamber L with the pump 31 to retreat the piston 34. Then, the piston 34, the spring member S, the spring seat 20, and the bracket 13 move upward in FIG. 3, with respect to the outer shell 10. This inserts the rod 11 into the outer shell 10 to contract the shock absorber A and decrease the vehicle height.

During ordinary vehicle running when, for example, the vehicle weight, a weight of occupant, and a weight of baggage act on shock absorber A, if the position of the piston 34 is close to a position that is maximally retreated, the spring seat 21 is supported by the housing 33, and if the piston 34 advances by the constant amount or more, the auxiliary spring 22 becomes in the closed height, and the spring seat 21 separates from the housing 33. Accordingly, during the ordinary vehicle running, the spring member S behaves as being formed of only the suspension spring 2. However, for example, as climbing over a difference in level, when the shock absorber A fully extends, even in the state where the piston 34 has been maximally retreated, the auxiliary spring 22 extends to prevent the suspension spring 2 from being idle.

Also when the vehicle V stops, the vehicle weight and the like acts on the shock absorber A. Thus, when the vehicle V stops, if the piston 34 is maximally retreated, the spring seat 21 becomes in the state supported by the housing 33.

The following describes operational advantage of the shock absorber A according to the embodiment.

In the shock absorber A, in a state mounted on the vehicle V that has stopped, in the state where the piston 34 has been maximally retreated, the spring seat 21 is supported by the housing 33. Thus, during the housing 33 is supporting the spring seat 21, the load does not act on the auxiliary spring 22 to ensure reduction of the load on the auxiliary spring 22.

It should be noted that the axial length of the pipe portion 33b of the housing 33 may be set shorter than a length that the closed height of the auxiliary spring 22 is added to the axial length of the piston 34. In this case, the spring seat 21 does not abut on the housing 33, and the load does not act on the pipe portion 33b of the housing 33. Thus, a wall thickness of the pipe portion 33b can be thinned.

In a state where the spring constant of the auxiliary spring 22 is smaller than the spring constant of the suspension spring 2, and the shock absorber A is mounted on the vehicle V that has stopped, and in a state where the spring seat 21 is movable, the auxiliary spring 22 becomes in the closed height. Accordingly, the shock absorber A including the auxiliary spring 22 and a shock absorber without the auxiliary spring can use the suspension springs 2 having a common specification, and even if the auxiliary spring 22 is disposed, a spring property of the shock absorber A during vehicle running can be approximated to a spring property of the shock absorber without the auxiliary spring.

It should be noted that the spring constants of the auxiliary spring 22 and the suspension spring 2 can be changed as necessary in accordance with a desired spring property. In the shock absorber A, the suspension spring 2 and the auxiliary spring 22 are the coiled springs, but may be rectangular wire helical springs whose rectangular cross-section materials are formed into coil forms. The state where the auxiliary spring 22 becomes in the closed height in the state where the spring seat 21 is movable, that is, in a state where the spring seat 21 is not supported by the housing 33 may be a getting-on 1G state that a weight of motorcycle rider is added to the 1G state. Then, such a change is possible regardless whether it is a configuration where the spring seat 21 can contact the housing 33 or not.

The jack 3 includes the housing 33 disposed on the outer periphery of the shock absorber main body 1 to include the pipe portion 33b, and the circular piston 34 that is slidably inserted into the pipe portion 33b to form the liquid chamber L with the housing 33 and supports the upper end in FIG. 2 of the auxiliary spring 22. Then, the axial length of the pipe portion 33b is longer than the axial length of the piston 34. Furthermore, the auxiliary spring 22 is coiled, the inner diameter of the auxiliary spring 22 is equal to or more than the inner diameter of the piston 34, and the outer diameter of the auxiliary spring 22 is equal to or less than the outer diameter of the piston 34.

With this configuration, when the piston 34 is retreated, the auxiliary spring 22 is housed in the housing 33. Accordingly, even when the piston 34 and the auxiliary spring 22 are disposed vertically alongside, the axial length that the jack main body 30 is added to the auxiliary spring 22 becomes short. This can prevent the shock absorber A from being voluminous in the axial direction. The piston 34 and the auxiliary spring 22 are disposed vertically alongside. This can prevent the shock absorber A from being voluminous in a lateral direction.

It should be noted that the auxiliary spring 22 may be disposed on an outer periphery of the piston 34, and the configuration of the jack 3 can be changed as necessary. In the jack 3, the hydraulic oil is used, however, it is not limited to this. For example, water or a water solution may be used. Then, such changes are possible regardless whether it is the configuration where the spring seat 21 can contact the housing 33 or not, or regardless the configurations of the suspension spring 2 and the auxiliary spring 22.

The shock absorber A includes the shock absorber main body 1, the spring seat 21 that supports the upper end in FIG. 2 of the suspension spring 2 to be movable in the axial direction of the shock absorber main body 1, the jack 3 that adjusts the position of the spring seat 21, and the auxiliary spring 22 interposed between the spring seat 21 and the jack 3.

With this configuration, even when the vehicle-height adjustment amount is increased without changing the suspension spring 2, the gap between the suspension spring 2 and the jack 3 is filled with the auxiliary spring 22. This can prevent the suspension spring 2 from becoming in the idle state. Then, if the vehicle-height adjustment amount is increased, foot grounding property when the vehicle stops becomes good. Preventing the suspension spring 2 from being idle by the auxiliary spring 22 can prevent the jack main body 30 from dropping, the jack main body 30 and the flange 14 from repeatedly separating and contacting to generate abnormal noise, and these positions from displacing, even when the jack main body 30 is supported by the elastic force of the suspension spring 2.

It should be noted that in the shock absorber A, the spring seat 21 and the piston 34 are contacted with the guide 15 disposed on the outer periphery of the outer shell 10. However, by making the outer periphery of the outer shell 10 a slide surface, the spring seat 21 and the piston 34 may be directly contacted with the outer periphery of the outer shell 10.

The shock absorber A is an inverted type where the outer shell 10 is coupled to the vehicle body B, and the rod 11 is coupled to the rear wheel W. Instead of this, the shock absorber A may be an upright type where the outer shell 10 is coupled to the rear wheel W, and the rod 11 is coupled to the vehicle body B.

The shock absorber A is interposed between the vehicle body B and the rear wheel W of the motorcycle. However, the shock absorber A may be used for, for example, a saddle-ride type vehicle except for the motorcycle, or an automobile.

Such changes as described above are possible regardless whether it is the configuration where the spring seat 21 can contact the housing 33 or not, or regardless of the configurations of the suspension spring 2, the auxiliary spring 22, and the jack 3.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2015-150253 filed with the Japan Patent Office on July 30, 2015, the entire contents of which are incorporated into this specification.

## Claims

1. A shock absorber comprising:
a shock absorber main body;
a spring seat configured to support one end of a suspension spring, the spring seat being movable in an axial direction of the shock absorber main body;
a jack configured to adjust a position of the spring seat; and
an auxiliary spring interposed between the spring seat and the jack.

2. The shock absorber according to claim 1, wherein
the jack includes:
a housing that is disposed on an outer periphery of the shock absorber main body and includes a pipe portion; and
a circular piston that is slidably inserted into the pipe portion to form a liquid chamber with the housing, the piston being configured to support one end of the auxiliary spring, and
the pipe portion has an axial length longer than an axial length of the piston, the auxiliary spring is coiled, the auxiliary spring has an inner diameter equal to or more than an inner diameter of the piston, and the auxiliary spring has an outer diameter equal to or less than an outer diameter of the piston.

3. The shock absorber according to claim 1, wherein
the auxiliary spring has a spring constant smaller than a spring constant of the suspension spring.

4. The shock absorber according to claim 1, wherein
in a state mounted on a vehicle that has stopped, in a state where the spring seat is movable, the auxiliary spring is in a closed height.

5. The shock absorber according to claim 2, wherein
in a state mounted on a vehicle that has stopped, in a state where the piston has been maximally retreated, the spring seat is supported by the housing.
